Europäisches Patentamt

(19) European Patent Office

Office européen des brevets

(11) Numéro de publication: **0 021 929**
A1

# (12) DEMANDE DE BREVET EUROPEEN

(21) Numéro de dépôt: **80400813.4**

(22) Date de dépôt: **06.06.80**

(51) Int. Cl.³: **G 01 S 13/86**
G 01 S 13/87, G 01 S 7/36

(30) Priorité: **13.06.79 FR 7915138**

(43) Date de publication de la demande:
**07.01.81 Bulletin 81/1**

(84) Etats Contractants Désignés:
**DE GB IT NL SE**

(71) Demandeur: **"THOMSON-CSF"**
**173, Boulevard Haussmann**
**F-75360 Paris Cedex 08(FR)**

(72) Inventeur: **Teilhet, Michel**
**"THOMSON-CSF" - SCPI 173, Bld Haussmann**
**F-75360 Paris Cedex 08(FR)**

(74) Mandataire: **Eisenbeth, Jacques Pierre et al,**
**"THOMSON-CSF" - SCPI 173, bld Haussmann**
**F-75360 Paris Cedex 08(FR)**

(54) Dispositif d'acquisition distance dans un système radar.

(57) Le dispositif, qui comporte un radar de veille (1) avec une antenne directive mobile et dont on connaît à tout instant la direction, un dispositif de poursuite (6) dont on connaît aussi à tout instant la ligne de visée, et un extracteur vidéo (5), comporte également des moyens détectant le passage de l'antenne de veille dans la direction de la ligne de visée du dispositif de poursuite, ainsi que des moyens autorisant la mesure de la distance d'un écho poursuivi à partir des signaux de veille, lorsque la direction de l'antenne de veille est la même que celle de la ligne de visée.

EP 0 021 929 A1

./...

FIG. 1

1

## DISPOSITIF D'ACQUISITION DISTANCE
## DANS UN SYSTEME RADAR

L'invention concerne un dispositif d'acquisition distance dans un système radar, notamment dans un système de poursuite. Plus précisément, l'invention s'applique, soit à un radar de poursuite ne pouvant déterminer la distance de l'objectif parce que sa télémétrie est brouilée ou n'existe pas, soit à un dispositif de poursuite angulaire du type optronique passif comme une caméra de télévision ou à infrarouge (accessoirement le dispositif optronique peut être monté sur la même tourelle que le radar), soit un système laser qui ne donnerait pas la distance.

En général, ces dispositifs (radars ou optroniques) sont couplés à un radar de veille dont le rôle est d'acquérir la ou les cibles, et ensuite de transférer les données de désignation d'une cible à un radar de poursuite. Lorsque le dispositif de veille est un radar, les informations de désignation qu'il donne sont le gisement et la distance de la cible. Lorsque le dispositif de veille est un moyen optronique passif, caméra de télévision ou infra-rouges, les informations sont le gisement et le site. Dans la présente invention, on ne considèrera que les systèmes radar de veille donnant la distance, équipés d'une antenne directive mobile.

Le dispositif de poursuite peut être également optronique passif ou actif - c'est le cas d'un laser - ou bien encore un système radar.

Lorsqu'il est passif, il n'est pas possible d'obtenir une mesure précise de la distance de la cible, ce qui présente un gros inconvénient. Dans le cas où le système de poursuite est actif, il peut être brouillé, notamment par un brouilleur de détec-

2

tion du type voleur de télémétrie, il devient alors impossible de connaître avec précision la distance de la cible, et de déterminer donc l'évolution de sa trajectoire.

Un des buts de l'invention est de donner une mesure précise de la distance lorsque le système de poursuite est optronique passif. Et dans le cas où le système de poursuite est constitué par un radar, l'invention permet d'assurer, par une mesure redondante de la distance, l'antibrouillage du système de poursuite radar.

Selon une caractéristique de l'invention, le dispositif d'acquisition distance dans un système radar, comportant un radar de veille équipée d'une antenne directive mobile dont on connaît à tout instant la direction, un dispositif de poursuite dont la ligne de visée est également connue à tout instant, et un extracteur vidéo, comprend des moyens détectant le passage de l'antenne de veille dans la direction de la ligne de visée du système de poursuite à des moyens autorisant la mesure de la distance d'un écho à partir des signaux de veille pour une coïncidence de la direction de l'antenne de veille et de celle de la ligne de visée de l'antenne de poursuite.

D'autres caractéristiques et avantages de l'invention apparaîtront dans la description qui suit, illustrée par les figures suivantes :

- la figure 1, un schéma synoptique du dispositif selon l'invention ;

- la figure 2, la forme du signal à la sortie du détecteur de phase du dispositif selon l'invention ;

- les figures 3 et 4, la forme des signaux en sortie des deux amplificateurs à seuil du dispositif selon l'invention.

3

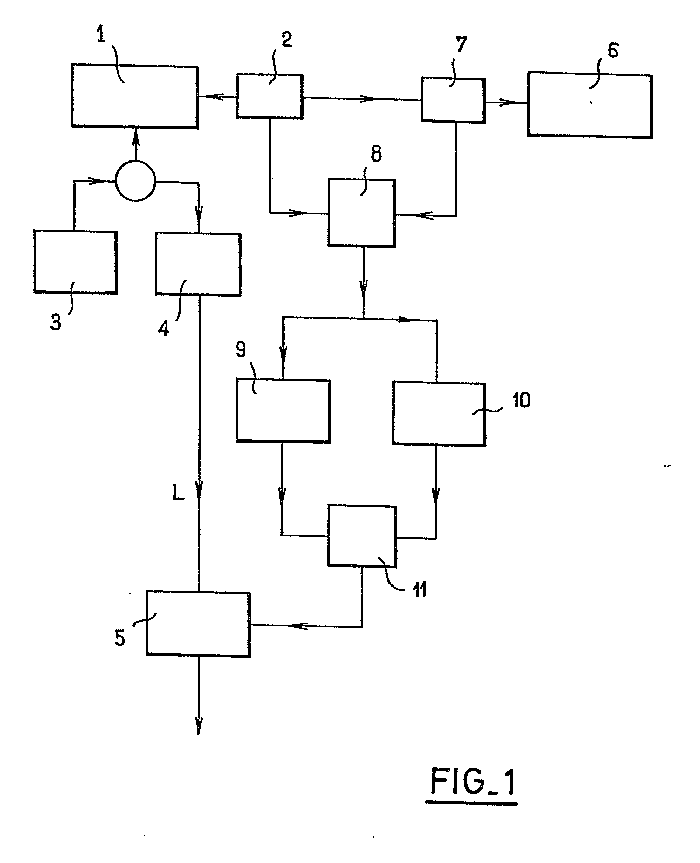

La figure 1 représente un schéma synoptique de
l'invention. Le système radar représenté est composé d'un radar de veille de type classique et d'un
système de poursuite. Le radar de veille comporte
une antenne directive mobile 1 dont la direction
est connue à tout instant grâce à un synchrotransmetteur 2 ou à un codeur numérique. La détection
d'une cible éventuelle dans la direction de l'antenne se fait à l'aide des signaux provenant de
l'émetteur 3 du radar et des échos reçus par le
récepteur 4. La sortie du récepteur est connectée à
l'entrée d'un extracteur 5 vidéo permettant à tout
instant de mesurer la distance d'un écho à partir
des signaux de veille. Cette mesure de la distance
peut se faire sur toute la distance ou seulement
dans une "fenêtre" de sélection en distance qui
n'autorise la mesure que dans une certaine zone, si
l'on désire réduire les possibilités de "fausse
alarme" sur des échos parasites proches. Pour limiter
également la détection du bruit radar, on peut
choisir un seuil de détection en vidéo. Suivant le
procédé classique, non représenté sur la figure, les
échos reçus par l'antenne sont envoyés sur l'écran
d'un indicateur panoramique par exemple. Par une commande manuelle ou automatique, le système de poursuite se met dans le gisement indiqué. La direction
de la ligne de visée du système de poursuite 6 est
connue à tout instant par un synchrodétecteur ou par
un codeur numérique 7. Ainsi, que ce soit au moyen
des deux synchro-machines 2 et 7, ou au moyen de deux
codeurs numériques, la direction du radar de veille
et la direction de la ligne de visée du système de
poursuite sont connues à chaque instant. Suivant
l'invention on détecte le passage de l'antenne de
veille dans le même gisement que l'antenne du système

4

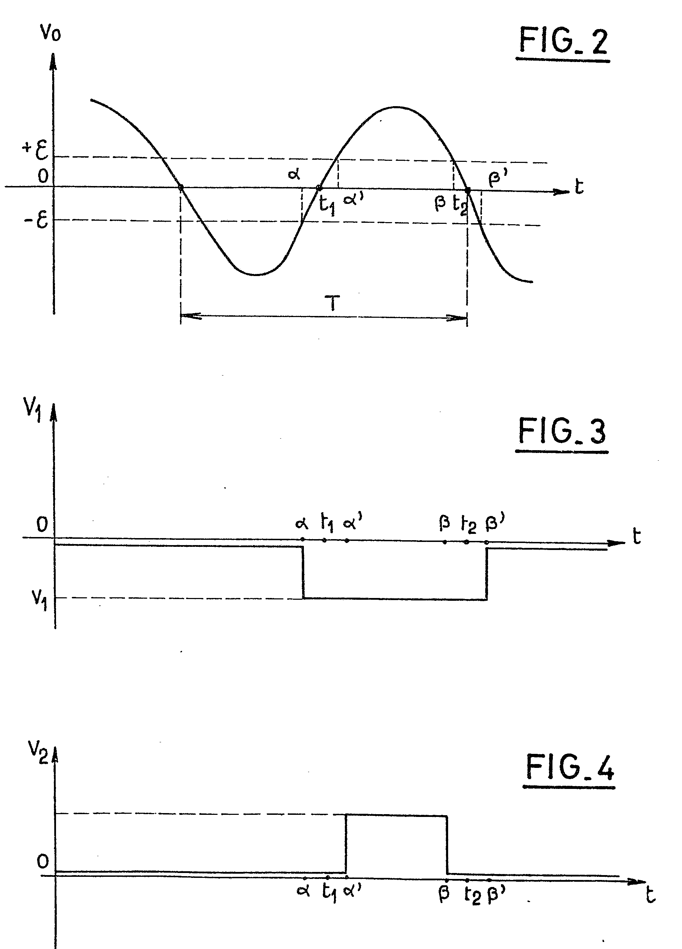

de poursuite. Pour cela, le signal de sortie du synchrotransmetteur 2 donnant la position en gisement de l'antenne de veille ainsi que celui en sortie du synchrodétecteur 7 sont envoyés à l'entrée d'un détecteur de phase 8. La figure 2 donne la forme du signal donné par le détecteur de phase 8, Vo étant la tension de sortie en fonction du temps. A l'instant $T_1$, l'antenne de veille 1 est dans la même direction que la ligne de visée, alors qu'à l'instant $T_2$, les deux directions sont à 180° l'une de l'autre. La période T du signal est égale à la période de rotation de l'antenne de veille 1. Les instants $\alpha$, $\alpha'$, $\beta$ et $\beta'$ correspondent aux instants où l'antenne de veille 1 est dans la même direction ou dans une direction opposée à celle de la ligne de visée, avec une erreur en degrés de $\pm j$ correspondant à une erreur en tension de $\pm \xi$. La sortie du détecteur de phase 8 est appliquée à l'entrée de deux amplificateurs à seuil $(- \xi$ et $+ \xi)$ 9 et 10. Le signal en sortie de l'amplificateur 9 est représenté figure 3. A l'instant $\alpha$, où l'antenne de veille 1 est dans la direction de la ligne de visée, avec une erreur en degré de $\alpha$, la tension V passe de 0 à une valeur négative jusqu'à l'instant $\beta'$ où la courbe passe une nouvelle fois par la valeur $- \zeta -$.

Le signal en sortie de l'amplificateur à seuil 10 est représenté figure 4. A l'instant où l'antenne de veille passe par la même direction que celle de la ligne de visée, à $+ \epsilon$ près, la tension en sortie de l'amplificateur passe de 0 à une valeur positive $V_2$ jusqu'à l'instant $\beta$ où elle retombe à 0. Les sorties des deux amplificateurs 9 et 10 sont connectées à un sélecteur 11, qui sera ouvert sur le front négatif du signal $V_1$ et fermé sur le front positif du signal $V_2$. Cette sélection autorise la mesure de la distance par

5

l'extracteur, de telle sorte que cette mesure n'est effectuée que pendant le créneau d'autorisation donné par le sélecteur. Dès que le sélecteur donne l'autorisation, il est possible de déclencher par exemple un chronomètre, à l'instant d'émission d'un signal par le radar de veille, qui s'arrêtera à l'apparition d'un écho, le temps écoulé étant caractéristique de la distance qui sépare l'émetteur de veille de l'écho. Lorsque le système de poursuite est optronique passif comme une caméra de télévision ou à infra-rouges, on obtient ainsi un moyen de mesurer la distance d'un écho à partir des signaux de veille. Lorsque la poursuite se fait à l'aide d'un radar, l'invention assure par une mesure redondante l'antibrouillage du système.

Le dispositif selon l'invention peut également comporter un extracteur vidéo associé au radar de poursuite, qui permet de mesurer à tout instant la distance d'un écho à partir des signaux de la poursuite. L'invention sert alors à pallier le brouillage du radar de poursuite en assurant la mesure de la distance.

6

# REVENDICATIONS

1. Dispositif d'acquisition distance dans un système radar comportant un radar de veille équipé d'une antenne directive mobile tournant continuellement autour de son axe de rotation et un moyen donnant à tout instant la direction de cette antenne, un dispositif de poursuite doté également d'un moyen donnant la direction de la ligne de visée et un extracteur vidéo, caractérisé en ce qu'il comporte :
- des moyens détectant le passage de l'antenne de veille dans la direction de la ligne de visée du dispositif de poursuite,
- et des moyens déclenchant la mesure de la distance d'un écho poursuivi à partir des signaux de veille pour une coïncidence de la direction de l'antenne de veille et de celle de la ligne de visée de l'antenne de poursuite.

2. Dispositif d'acquisition distance selon la revendication 1, caractérisé en ce que le dispositif de poursuite est optronique passif.

3. Dispositif d'acquisition distance selon la revendication 1, caractérisé en ce que le dispositif de poursuite est optronique actif, laser par exemple.

4. Dispositif d'acquisition distance, selon la revendication 1, caractérisé en ce que le dispositif de poursuite est un radar.

5. Dispositif d'acquisition distance selon la revendication 1, caractérisé en ce que les moyens permettant de connaître à tout instant les directions de l'antenne de veille et de la ligne de visée sont des synchromachines, respectivement un synchrotransmetteur et un synchrodétecteur.

6. Dispositif d'acquisition distance selon la revendication 1, caractérisé en ce que les moyens permettant de connaître à tout instant les directions de

7

l'antenne de veille et de la ligne de visée sont des codeurs numériques.

7. Dispositif d'acquisition selon la revendication 1, caractérisé en ce que les moyens de détection du passage de l'antenne de veille dans la direction de la ligne de visée du dispositif de poursuite comprennent un détecteur de phase, connecté à la sortie du synchrodétecteur, délivrant un signal sinusoïdal de période égale à celle de rotation de l'antenne de veille.

8. Dispositif d'acquisition distance selon la revendication 1, caractérisé en ce que les moyens autorisant la mesure de la distance d'un écho à partir des signaux de veille comprennent :

- un amplificateur à seuil positif (+ ε), dont l'entrée est connectée à la sortie du détecteur de phase, délivrant un signal rectangulaire négatif,
- un second amplificateur à seuil négatif (- ε), dont l'entrée est connectée à la sortie du détecteur de phase, délivrant un signal rectangulaire positif,
- un sélecteur dont l'entrée est connectée aux sorties des deux amplificateurs et dont le signal de sortie commande l'autorisation de mesure de la distance par l'extracteur.

FIG_1

FIG. 2

FIG. 3

FIG. 4

**Office européen des brevets**

## RAPPORT DE RECHERCHE EUROPEENNE

EP 80 40 0813

| CLASSEMENT DE LA DEMANDE (Int. Cl. 3) |
|---|

### DOCUMENTS CONSIDERES COMME PERTINENTS

| Catégorie | Citation du document avec indication, en cas de besoin, des parties pertinentes | Revendication concernée |
|---|---|---|
| | <u>DE - C - 977 911</u> (J.F. MENKE) <br> * Le document en entier * <br> -- | 1,2 |
| | <u>GB - A - 1 305 011</u> (ELTRO) <br> * Le document en entier * <br> -- | 1,2 |
| | <u>US - A - 3 108 270</u> (A.F. FAIR-BANKS) <br> * De colonne 1, ligne 9 - colonne 2, ligne 7; de colonne 2, ligne 25 - colonne 3, ligne 3, de colonne 6, ligne 42 - colonne 7, ligne 18; figures 1 et 4 * <br> -- | 1,2 |
| | <u>FR - A - 2 058 194</u> (HUGHES) <br> * De page 1, ligne 1 - page 2, ligne 18; de page 3, ligne 13 - page 4, ligne 22 * <br> -- | 1-4 |
| | <u>DE - B - 1 277 950</u> (HOLLANDSE SIGNAAL APPARATEN) <br> * De colonne 1, lignes 1-10 et 35-50; de colonne 2, ligne 50 - colonne 5, ligne 47; figure 1 * <br> -- | 1,4,6 |
| | <u>US - A - 3 021 523</u> (D.C. DAVIS et al.) <br> * Colonne 1, lignes 33-52; de colonne 5, ligne 57 - colonne 6, ligne 17; figures 4 et 6 * <br> -- ./. | 1 |

| DOMAINES TECHNIQUES RECHERCHES (Int. Cl. 3) |
|---|

G 01 S 13/86
13/87
7/36

G 01 S 7/36
7/42
13/08
13/10
13/66
13/72
13/86
13/87
17/66
17/87

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche <br> La Haye | Date d'achèvement de la recherche <br> 16-09-1980 | Examinateur <br> VAN WEEL |
|---|---|---|

OEB Form 1503.1 06.78

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | US - A - 2 551 589 (A.G. EVERHART)<br>* Colonne 1, lignes 1-9; de colonne 1, ligne 54 - colonne 4, ligne 32; figures 1 et 2 *<br><br>-- <br><br>US - A - 2 927 316 (C.E. GRANQVIST)<br>* Colonne 1, lignes 59-67; de colonne 2, ligne 63 - colonne 3, ligne 4; colonne 3, lignes 43-49; figure 1 *<br><br>--<br><br>FR - A - 2 280 907 (SAAB-SCANIA)<br>* page 4, ligne 6-11; page 5, revendication unique *<br><br>----<br><br>-- | 1<br><br><br><br><br>1,5<br><br><br><br><br><br><br><br>3,4 | DOMAINES TECHNIQUES RECHERCHES (Int. Cl. ³) |